# EUROPEAN PATENT SPECIFICATION

(11) **EP 1 859 215 B1**
(45) Date of publication and mention of the grant of the patent: **20.02.2019**
(21) Application number: 06708371.7
(22) Date of filing: 20.02.2006
(51) Int. Cl.: F27B 3/18, F27D 13/00, F27D 3/00, C21C 5/56, F27D 3/06

(54) **MELTING APPARATUS HAVING A LOADING DEVICE FOR LOADING A METAL CHARGE**
SCHMELZVORRICHTUNG MIT VORRICHTUNG ZUM CHARGIEREN EINER METALLCHARGE
DISPOSITIF DE FUSION COMPRENANT UN DISPOSITIF POUR CHARGER DE METAL

(30) Priority: 22.02.2005 IT UD20050021
(43) Date of publication of application: 28.11.2007
(73) Proprietor: Danieli & C. Officine Meccaniche SpA, 33042 Buttrio (Udine) (IT)
(72) Inventor: SELLAN, Romano, I-34124 Trieste (IT); TERLICHER, Stefano, I-33043 Cividale Del Friuli (IT)
(74) Representative: Petraz, Gilberto Luigi
(86) International application number: PCT/EP2006/060083
(87) International publication number: WO 2006/089867

(56) References cited:
- US-A1- 2001 055 739
- VALLOMY J A ET AL: "THE CONSTEEL PROCESS: AN INTEGRAL SCRAP PREHEATER FOR THE EAF" STEEL TIMES, FUEL & METALLURGICAL JOURNALS LTD. LONDON, GB, vol. 221, no. 5, 1 May 1993 (1993-05-01), page 221,223, XP000365104 ISSN: 0039-095X

## Description

### FIELD OF THE INVENTION

The present invention concerns a device for loading a metal charge in a melting plant, particularly in an electric arc furnace, of the type that uses a loading system with a belt or channel, and with the introduction of the charge from a side of the furnace.

Possible preheating means can be associated with the loading system.

To be more exact, the invention concerns the last segment of the conveyor, normally mounted on translation means, which cooperates directly with a suitable aperture provided in the lateral wall, or sometimes the upper wall, of the furnace, in order to discharge the scrap metal, or other type of charge, inside the furnace itself.

### BACKGROUND OF THE INVENTION

Plants are known for the transformation and melting of metal charges, which comprise an electric arc furnace suitable to collaborate with means to transport and possibly preheat the scrap, of the type with a linear conveyor. The electric furnace provides at least a container, or hearth, and a covering roof. The electrodes are positioned through suitable holes in the roof.

The conveyor means can be of the vibrating type to allow the feed of the charge, and cooperate with the electric furnace on one side and, on the other side, with a scrap loading system and with a possible system to remove the fumes.

The last segment of the conveyor means normally consists of a segment of autonomous conveyor, hereafter denominated connection conveyor, associated with translation means, which can consist of a trolley, a pantograph arm or any other translation means suitable for the purpose.

One example of this connection conveyor is disclosed in US-A-5.800.591, upon which the first part of the preamble of the independent claim is based.

The translation means are disposed so as to move in the direction suitable to create the desired connection between the system that conveys the load and the inlet aperture into the electric furnace. With this displacement, the connection conveyor can be introduced inside the volume of the melting furnace, for example during the unloading of the scrap, or removed therefrom, for example when the scrap is not being unloaded. The movement of the connection conveyor can reach values of several meters.

When the connection conveyor, associated with the translation means, cooperates with the inside of the furnace, the vibration imparted thereto determines the feed and the subsequent fall of the scrap into the furnace. On the contrary, when the connection conveyor is completely outside the furnace, the vibration is stopped, so that the scrap possibly present therein do not advance. Normally, however, the position of the connection conveyor completely outside the furnace is assumed when there is no scrap on the trolley.

It is known that melting furnaces are made to tilt around a substantially horizontal axis in order to carry out the tapping operation. In some embodiments, the tilting axis is parallel, but offset on the side in which tapping takes place, with respect to a median horizontal axis of the furnace, lying on the same denominated connection conveyor, associated with translation means, which can consist of a trolley, a pantograph arm or any other translation means suitable for the purpose.

One example of this connection conveyor is disclosed in US-A-5.800.591, upon which the first part of the preamble of the independent claim is based.

The translation means are disposed so as to move in the direction suitable to create the desired connection between the system that conveys the load and the inlet aperture into the electric furnace. With this displacement, the connection conveyor can be introduced inside the volume of the melting furnace, for example during the unloading of the scrap, or removed therefrom, for example when the scrap is not being unloaded. The movement of the connection conveyor can reach values of several meters.

When the connection conveyor, associated with the translation means, cooperates with the inside of the furnace, the vibration imparted thereto determines the feed and the subsequent fall of the scrap into the furnace. On the contrary, when the connection conveyor is completely outside the furnace, the vibration is stopped, so that the scrap possibly present therein do not advance. Normally, however, the position of the connection conveyor completely outside the furnace is assumed when there is no scrap on the trolley.

It is known, that melting furnaces are made to tilt around a substantially horizontal axis in order to carry out the tapping operation.

For example, plants with tilting furnaces are disclosed US-A-2001/055739 and in Vallomy et al. "The Consteel process: an integral scrap preheater for the EAF" Steel Times, Fuel & Metallurgical Journals LTD. London, GB, vol. 221, no. 5, 1 May 1993. In some embodiments, the tilting axis is parallel, but offset on the side in which tapping takes place, with respect to a median horizontal axis of the furnace, lying on the same vertical plane, or baricentric, on which the baricenter of the furnace lies. This offset arrangement is due to the requirement of having a greater weight of the furnace on the opposite side from which tapping takes place, so that, if there are problems during the tapping step, the hearth, oscillating autonomously around the tilting axis because of the greater weight, automatically returns to its normal, non-inclined position.

The baricentric plane which contains the median axis of the furnace normally coincides with the median vertical plane which contains the longitudinal axis of the connection conveyor. However, in the known arrangements, this causes problems in carrying out the small oscillations of the hearth when the connection conveyor cooperates with the aperture present in the wall of the furnace.

In fact, since tilting occurs on an axis different from the median axis of the furnace, it is necessary to oversize the inlet aperture of the connection conveyor in order to guarantee sufficient space which will allow to perform said small oscillations without mechanical interference and collisions with the connection conveyor.

This oversizing of the inlet aperture, however, entails considerable problems in terms of containing the leakage of fumes and gases when the furnace is functioning, which compromises the correct and efficient functioning of the furnace at least in the steps when the metal charge is introduced and unloaded, and in the melting step.

This problem is not addressed in the document US-A-5.800.591.

The purpose of the invention according to independent claim 1 is to achieve, with a relatively simple solution, a melting apparatus comprising a device for loading scrap of the type with a terminal connection conveyor which overcomes the shortcomings caused by the misalignment of the median axis of the furnace and the tilting axis.

The Applicant has devised, tested and embodied the present invention to overcome this shortcoming of the state of the art and to obtain other advantages as described hereafter.

### SUMMARY OF THE INVENTION

The present invention is set forth and characterized essentially in the main claim, while the dependent claims describe other innovative characteristics of the invention.

The present invention is applied in an electric arc melting furnace with a scrap loading system of the type with a belt or channel, hereafter denominated main conveyor, associated with a connection conveyor provided as the terminal part of the main conveyor and able to cooperate with the inside of the furnace.

According to the invention, the vertical plane on which the longitudinal axis of said connection conveyor lies substantially coincides with the vertical plane on which the tilting axis of the furnace lies, and is therefore parallel but offset with respect to the vertical plane on which the median axis and the baricenter of the furnace lie. Thanks to this characteristic, the inlet aperture provided on a wall of the furnace, and through which the connection conveyor can be put in cooperation with the inside of the furnace, can be sized in direct correlation with the bulk size of the trolley, and does not have to be oversized as happens in the known arrangements having the tilting axis offset with respect the baricentric axis. This because the tilting rotation of the furnace which, excluding the tapping step, is normally comprised between ± 2° and ± 6°, causes the inlet aperture to rotate around the connection conveyor. Consequently, this rotation can take place freely without needing to oversize the aperture with respect to the at least lateral bulk size of the connection conveyor, which gives advantages in terms of the sealing conditions in both static and dynamic conditions of the furnace.

The connection conveyor has its terminal end inclined with respect to the orthogonal to its longitudinal axis so that, when it cooperates with the inside of the furnace, the tips of said terminal end are substantially at the same distance from the inner wall, made of refractory material, of the hearth of the furnace.

This inclination of the terminal end of the connection conveyor is due to the fact that its longitudinal axis is offset with respect to the median axis of the furnace. Because of this offset arrangement, in the presence of a terminal end orthogonal to the longitudinal axis, there would be points of the terminal structure of the connection conveyor more exposed than others to the thermal load arriving from inside the furnace, with obvious problems of overheating and therefore of increased wear, damage and/or the need for differentiated cooling.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows a plane view of a loading device according to the invention for a melting plant comprising a main conveyor and a connection conveyor;
- fig. 2 is a schematized side view in which the furnace can be seen during the tilting step with the connection conveyor cooperating with the lateral aperture of the furnace;
- figs. 3 and 4 show respectively a lateral section and a view from above of the connection conveyor according to the invention;
- fig. 5 shows the development of a metal sheet used for the connection conveyor in figs. 3 and 4.

### DETAILED DESCRIPTION OF A PREFERENTIAL FORM OF EMBODIMENT OF THE INVENTION

With reference to the attached drawings, the number 10 denotes generally a device for loading a metal charge in an electric arc melting furnace 11.

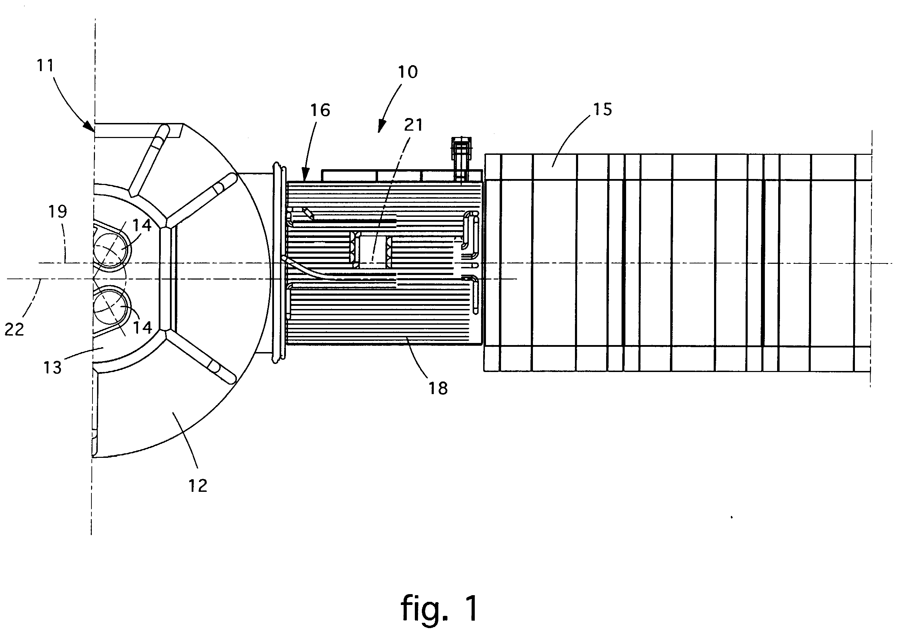

The loading device 10 consists of a main conveyor 15 (only the last segment of which is visible in fig. 1), which in this case, purely to give an example, is vibrating, and which is terminally associated with a connection conveyor 16, also preferably vibrating, mounted on a trolley 27. The movement of the trolley 27 allows the connection conveyor 16 to move forwards and backwards for some meters in order to be disposed in a first operating position, partly introduced inside the melting furnace 11, in order to discharge the metal charge (not shown) inside it, and a second stand-by position, completely outside the furnace, assumed for example when the melting furnace 11 has to be inclined for a certain entity in order to carry out the tapping of the molten metal.

Although the description of the preferential embodiment refers to a trolley 27 which moves in a direction substantially coinciding with the longitudinal axis of the main conveyor 15, the teaching of the invention can also be extended to solutions in which the connection conveyor 16 is mounted on an arm, a bridge crane, or on any other suitable type of translation means, and approaches the main conveyor 15 in an oblique direction with respect to its longitudinal axis.

During the loading steps, the main conveyor 15 feeds the metal charge towards the furnace 11, continuously or intermittently according to the loading tables, until it progressively disposes the metal charge on the base plane of the connection conveyor 16.

The connection conveyor 16 and/or the trolley 27 are also associated with vibration means, so that the metal charge can be discharged inside the furnace 11 when the connection conveyor 16 has at least its end disposed inside it.

The melting furnace 11 comprises a hearth 12, normally made of refractory material, and a roof 13, through which the electrodes 14 are positioned. On the wall of the hearth 12 an aperture 17 is made, in this case lateral, which serves for the at least partial introduction of the connection conveyor 16 inside the volume of the furnace 11.

The connection conveyor 16 is associated with a cover 18, possibly opening and/or removable, so that the fumes exiting from the melting furnace 11 can be channeled through the connection conveyor 16, and from it towards the main conveyor 15, in order to preheat the scrap before it is introduced inside the melting furnace 11.

The aperture 17 is equipped, in known manner, with sealing systems that at least partly close the gaps that are created between the aperture 17 and the bulk of the connection conveyor 16.

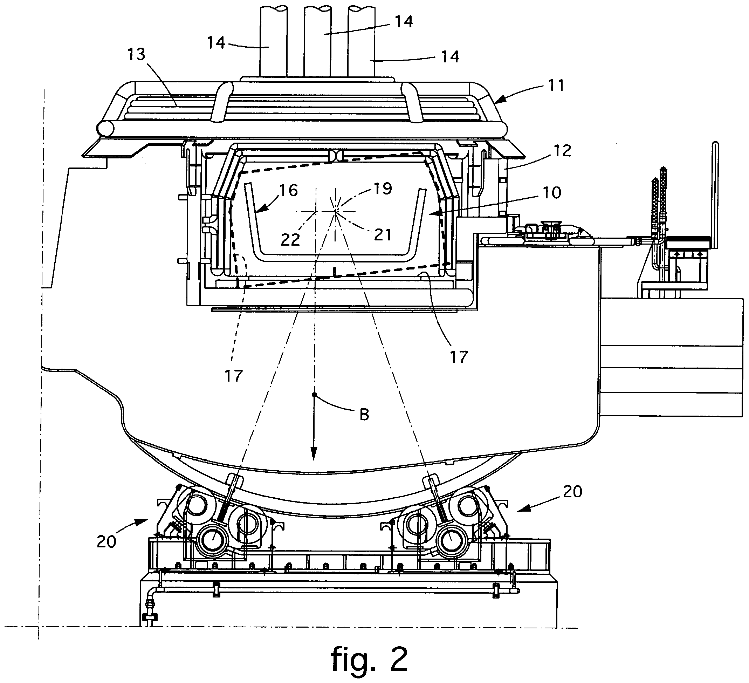

The hearth 12 of the melting furnace 11 can oscillate with respect to a substantially horizontal tilting axis 19 defined by the position of motorized rollers 20 on which the hearth 12 is rested (see fig. 2). The tilting axis 19 advantageously passes through the center of the lateral aperture 17 so that, during the tilting movement of the furnace 11, said aperture 17 substantially rotates around its center but does not translate either vertically or horizontally.

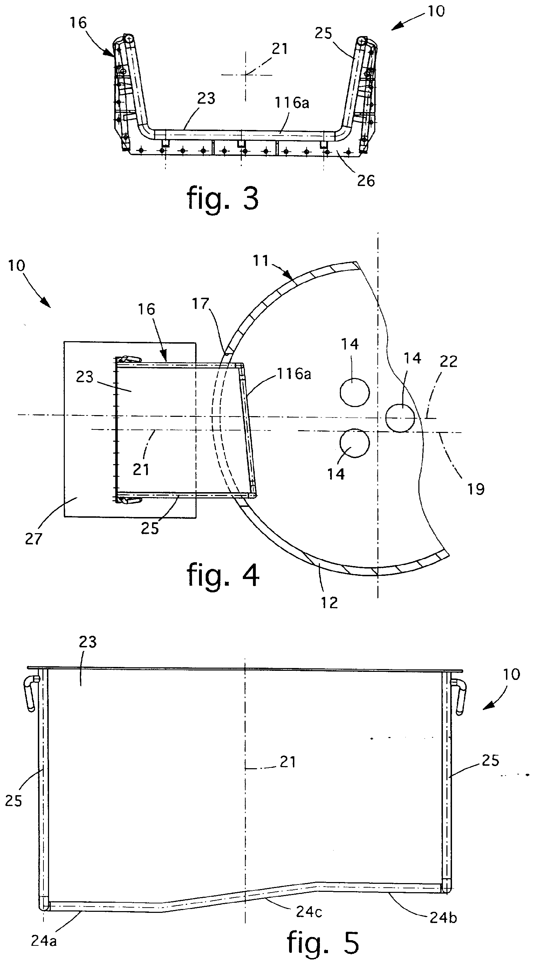

The tilting axis 19 lies on a vertical plane parallel but offset with respect to the vertical plane on which the median axis 22 and the baricenter B of the furnace 11 lie (see figs. 1 and 4), and is disposed on the opposite side with respect to the direction in which the furnace 11 is inclined in order for tapping to be carried out. This facilitates the natural return, thanks to the component of its own weight, of the melting furnace 11 to its normal, non-inclined position in the event that, during tapping, anomalies or interruptions to the electric energy occur.

According to the invention, the connection conveyor 16 has its longitudinal axis 21 lying on a vertical plane substantially coinciding with the vertical plane that contains said tilting axis 19, and hence offset with respect to the vertical plane that contains the median plane 22 of the melting furnace 11. Thanks to this characteristic, the lateral aperture 17 through which the connection conveyor 16 is introduced can be sized substantially on the lateral bulk size of the connection conveyor 16 itself.

In fact, since the rotation of the aperture 17 along the tilting axis 19 keeps it substantially in the same position with respect to the position that it assumes when the furnace 11 is in its normal, non-inclined position, by providing the vertical planes that contain the longitudinal axis 21 of the connection conveyor 16 and the tilting axis 19 substantially coinciding with each other, we obtain that the aperture 17 rotates around the connection conveyor 16 substantially without translating with respect thereto. This situation is shown schematically in fig. 2, where it can be seen that the substantial alignment of the tilting axis 19 and the longitudinal axis 21 of the connection conveyor 16 allows the aperture 17, during the small oscillations of ± 2°-6° which occur during the normal functioning of the furnace 11, only to rotate around the connection conveyor 16.

As a consequence, the need to oversize the aperture 17 with respect to the lateral bulk of the connection conveyor 16 is greatly reduced, with great advantages in terms of the need for additional sealing elements to cover the gaps/fissures that are generated between the aperture 17 and the connection conveyor 16, and also in terms of possible leakages of fumes and gases that occur when the connection conveyor 16 is in its position completely outside the melting furnace 11.

The invention also provides that, in the presence of said offset arrangement of the vertical planes containing the longitudinal axis 21 of the connection conveyor 16 and the median axis 22 of the furnace 11, the profile of the terminal end 116a of the connection conveyor 16 is inclined with respect to the straight line orthogonal to the axes 21, 22, that is to say, more rearward on the side where there is the median axis 22 of the furnace 11. Consequently, the tips of said terminal end 116a are, as much as possible, substantially equidistant from the inner refractory wall of the hearth 12 of the furnace 11, or in any case there are no zones nearer the electrodes 13 than others. This stratagem prevents localized overheating which causes premature wear and damage that require repair and maintenance interventions.

According to the invention, the shaped conformation of said terminal end 116a of the connection conveyor 16 is obtained starting from a single metal sheet 23, the front development of which consists of two substantially horizontal segments 24a and 24b, centrally connected by an inclined segment 24c.

At the edges of the sheet 23 tubular elements 25 are welded, in which cooling fluid circulates.

Below the sheet 23 a plate 26 is also welded, which functions as a sealing element with respect to the fissures that are created between the connection conveyor 16 and the aperture 17.

Modifications and variants may be made to the loading device as described heretofore, all of which shall come within the field of protection as defined by the attached claims.

## Claims

1. Melting apparatus comprising a melting furnace (11) comprising a hearth (12) having an aperture (17), and a loading device (10) for loading a metal charge in said melting furnace (11), wherein said loading device (10) comprises a main conveyor (15) terminally associated with a connection conveyor (16) cooperating with translation means (27) and having an operating position at least partially introduced inside of the furnace (11) through said aperture (17), said hearth (12) being rested on motorized rollers (20) defining a horizontal tilting axis (19) for said heart (12), said furnace (11) and said connection conveyor (16) having respective median axes (22, 21), wherein said tilting axis (19) of the furnace (11) lies on a vertical plane offset with respect to the vertical plane on which said median axis (22) and the baricenter (B) of the furnace (11) lie, and passing through said aperture (17) and said tilting axis (19) is disposed on the opposite side with respect to the direction in which the furnace (11) is inclined in order for tapping to be carried out, wherein said connection conveyor (16) has its median longitudinal axis (21) lying on a vertical plane coinciding with the vertical plane in which said tilting axis (19) of said furnace (11) lies and wherein said connection conveyor (16) has a terminal end (116a) provided with a profile inclined with respect to the orthogonal to the median longitudinal axis (21) of said connection conveyor (16).

2. Melting apparatus as in claim 1, **characterized in that** said median longitudinal axis (21) of the connection conveyor (16) lies on a vertical plane parallel and offset with respect to the vertical plane in which said median axis (22) of said furnace (11) lies.

3. Melting apparatus as in claim 1 or 2, **characterized in that** said profile of the terminal end (116a) faces towards the rear on the side of said connection conveyor (16) where there is said median axis (22) of the furnace (11), and follows the development of the inner refractory wall of the hearth (12).

4. Melting apparatus as in any claim from 1 to 3, **characterized in that** said connection conveyor (16) has a structure made with a single bent sheet of metal (23) the front development of which consists of two horizontal segments (24a, 24b) centrally connected by an inclined segment (24c).

5. Melting apparatus as in any claim from 1 to 4, wherein said melting furnace is an electric arc melting furnace.

## Patentansprüche

1. Schmelzvorrichtung umfassend einen Schmelzofen (11), der einen Herd (12) mit einer Öffnung (17) umfasst, und eine Ladevorrichtung (10) für das Laden einer Metallcharge in den Schmelzofen (11), wobei die Ladevorrichtung (10) einen Hauptförderer (15) umfasst, der endseitig mit einem Verbindungsförderer (16) verbunden ist, der mit Übersetzungmitteln (27) zusammenwirkt und eine Betriebsposition aufweist, die mindestens teilweise in den Ofen (11) durch die Öffnung (17) eingeführt ist, wobei der Herd (12) auf motorbetriebenen Rollen (20) aufliegt, die eine horizontale Schwenkachse (19) für den Herd (12) definieren, wobei der Ofen (11) und der Verbindungsförderer (16) entsprechende Mittelachsen (22, 21) aufweisen, wobei die Schwenkachse (19) des Ofens (11) auf einer vertikalen Ebene liegt, die gegenüber der vertikalen Ebene versetzt ist, auf der die Mittelachse (22) und der Schwerpunkt (B) des Ofens (11) liegen, und durch die Öffnung (17) hindurchtritt und die Schwenkachse (19) auf der gegenüberliegenden Seite in Bezug auf die Richtung angeordnet ist, in der der Ofen (11) geneigt ist, um ein Abstechen durchzuführen, wobei eine Mittellängsachse (21) des Verbindungsförderers (16) auf einer vertikalen Ebene liegt, die mit der vertikalen Ebene zusammenfällt, in der die Schwenkachse (19) des Ofens (11) liegt, und wobei der Verbindungsförderer (16) ein Endstück (116a) aufweist, das mit einem Profil versehen ist, das in Bezug auf die Orthogonale zu der Mittellängsachse (21) des Verbindungsförderers (16) geneigt ist.

2. Schmelzvorrichtung nach Anspruch 1, **dadurch gekennzeichnet, dass** die Mittellängsachse (21) des Verbindungsförderers (16) auf einer vertikalen Ebene liegt, die zur vertikalen Ebene parallel und versetzt ist, in der die Mittelachse (22) des Ofens (11) liegt.

3. Schmelzvorrichtung nach Anspruch 1 oder 2, **dadurch gekennzeichnet, dass** das Profil des Endstücks (116a) auf der Seite des Verbindungsförderers (16) nach hinten gerichtet ist, wo die Mittelachse (22) des Ofens (11) liegt, und die Ausarbeitung der inneren feuerfesten Wand des Herdes (12) verfolgt.

4. Schmelzvorrichtung nach einem der Ansprüche 1 bis 3, **dadurch gekennzeichnet, dass** der Verbindungsförderer (16) eine Struktur mit einem einzigen gebogenen Metallblech (23) aufweist, dessen vordere Ausarbeitung zwei horizontale Segmente (24a, 24b) aufweist, die zentral durch ein geneigtes Segment (24c) verbunden sind.

5. Schmelzvorrichtung nach einem der Ansprüche 1 bis 4, wobei der Schmelzofen ein Lichtbogenofen ist.

## Revendications

1. Appareil de fusion comprenant un four de fusion (11) comprenant un foyer (12) ayant une ouverture (17), et un dispositif de chargement (10) pour charger une charge de métal dans ledit four de fusion (11), ledit dispositif de chargement (10) comprenant un transporteur principal (15) associé en extrémité à un transporteur de liaison (16) coopérant avec un moyen de translation (27) et ayant une position opérationnelle au moins partiellement introduite dans le four (11) au travers de ladite ouverture (17), ledit foyer (12) étant posé sur des rouleaux motorisés (20) définissant un axe de basculement horizontal (19) pour ledit foyer (12), ledit four (11) et ledit convoyeur de liaison (16) ayant des axes médians respectifs (22, 21), ledit axe (19) de basculement du four (11) se trouvant sur un plan vertical décalé par rapport au plan vertical sur lequel se trouvent ledit axe médian (22) et le barycentre (B) du four (11), et traversant ladite ouverture (17), et ledit axe de basculement (19) est disposé du côté opposé par rapport à la direction selon laquelle le four (11) est incliné afin de permettre de réaliser un coulage, ledit convoyeur de liaison (16) ayant son axe longitudinal médian (21) situé sur un plan vertical coïncidant avec le plan vertical dans lequel se trouve ledit axe (19) d'inclinaison dudit four (11) et ledit convoyeur de liaison (16) ayant une extrémité terminale (116a) munie d'un profil incliné par rapport à l'orthogonale à l'axe longitudinal médian (21) dudit convoyeur de liaison (16).

2. Appareil de fusion selon la revendication 1, **caractérisé en ce que** ledit axe longitudinal médian (21) du convoyeur de liaison (16) se trouve sur un plan vertical parallèle et décalé par rapport au plan vertical dans lequel se trouve ledit axe médian (22) dudit four (11).

3. Appareil de fusion selon la revendication 1 ou la revendication 2, **caractérisé en ce que** ledit profil de l'extrémité terminale (116a) est orienté vers l'arrière sur le côté dudit convoyeur de liaison (16) sur lequel se trouve ledit axe médian (22) du four (11), et suit le développement de la paroi réfractaire interne du foyer (12).

4. Appareil de fusion selon l'une quelconque des revendications 1 à 3, **caractérisé en ce que** ledit convoyeur de liaison (16) présente une structure constituée d'une seule tôle pliée (23) dont le développement frontal est constitué de deux segments horizontaux (24a, 24b) reliés de façon centrale par un segment incliné (24c).

5. Appareil de fusion selon l'une quelconque des revendications 1 à 4, dans lequel ledit four de fusion est un four de fusion à arc électrique.
